# FASCICULE DE BREVET EUROPEEN

(11) **EP 1 911 673 B1**
(45) Date de publication et mention de la délivrance du brevet: **01.07.2009**
(21) Numéro de dépôt: 07019327.1
(22) Date de dépôt: 02.10.2007
(51) Int. Cl.: B64D 15/12, H05B 6/36

(54) **Procèdé et dispositif de dégivrage d'une paroi d'aéronef**
Verfahren und Vorrichtung zum Enteisen einer Außenhaut eines Luftschiffs
Method and device for de-icing the wall of an aircraft

(30) Priorité: 09.10.2006 FR 0608824
(43) Date de publication de la demande: 16.04.2008
(73) Titulaire: EUROCOPTER, 13725 Marignane Cédex (FR)
(72) Inventeur: Boschet, Patrick, 78180 Montigny le Bretonneux (FR); Lorcet, Bruno, 91940 Les Ulis (FR)
(74) Mandataire: Pouillot, Laurent Pierre Paul

(56) Documents cités:
- EP-A2- 0 428 142
- EP-A2- 0 433 763
- WO-A-00/52966
- GB-A- 1 012 165
- GB-A- 1 306 062
- JP-A- 10 165 311
- JP-A- 2001 278 195
- JP-A- 2005 228 571
- US-A- 2 142 785
- US-B1- 6 377 775

## Description

La présente invention est relative à un procédé et à un dispositif de dégivrage d'une paroi d'aéronef.

Le domaine technique de l'invention est celui de la fabrication d'hélicoptères.

La présente invention est plus particulièrement relative à un procédé et à un dispositif de chauffage de la face externe d'une paroi d'un giravion pour éviter la formation et/ou l'accumulation de givre sur cette face, et à une paroi - en particulier une pale de rotor d'avance et de sustentation d'un giravion équipée d'un tel dispositif.

Il est bien connu que la formation et l'accumulation de givre sur une surface externe d'un aéronef peut très rapidement modifier les caractéristiques aérodynamiques de cette surface ; notamment lorsque cette surface est une aile tournante de giravion, ce givrage peut être à l'origine de la chute du giravion.

De nombreuses recherches ont aussi été menées pour empêcher ou combattre la formation du givre.

Selon les brevets US-4060212 et FR-2346217, il a été proposé un dispositif de dégivrage par micro-ondes ; selon les brevets US-4399967, US-4458865 et US-4501398, il a été proposé de dégivrer la peau d'une aile en déformant la peau à l'aide d'impulsions électromagnétiques.

Il a été proposé dans le brevet US-1819497 d'équiper une aile d'avion d'une boucle conductrice qui est alimentée par une source de courant haute fréquence pour induire des courants dans la structure métallique de l'aile, chauffer cette structure et par conséquent combattre le givre. Le même principe a été proposé dans le brevet US-2547934 pour dégivrer les pales du stator d'un compresseur d'air.

Le document JP-2001278195 décrit un dégivrage pour un front d'aile par exemple destiné à une voilure tournante d'hélicoptère. Ce dégivrage est pourvu d'une plaque métallique externe à l'avant et d'un agencement d'induction interne. Dans des réalisations, la plaque métallique est pourvue de bobinages alors intégrés à distance du centre d'un bord d'attaque de l'aile. L'agencement d'induction interne comporte selon les réalisations, soit une nappe unique, soit deux noyaux volumineux inférieur et supérieurs chacun équipé d'une nappe unique en regard d'un bobinage intégré à la plaque métallique, soit un barreau à bobine cylindrique, soit encore une paire de noyaux avant et inférieurs où les bobinages sont répartis. Ce document ne décrit pas trois éléments inducteurs minces, dont un élément central comporte deux nappes jointives de bobinage.

Le document JP-2005228571 décrit un dispositif de chauffage par induction d'un liquide contenu dans un récipient en demi-tore. Dans ce récipient, deux bobinages sont placés à distance de part et d'autre d'un espace central dénué de chauffage. Ce document ne décrit pas un dispositif de dégivrage pour paroi d'aéronef en composite, avec trois éléments inducteurs minces, dont un élément central qui comporte deux nappes jointives de bobinage.

Cependant, le chauffage par induction d'une paroi d'aéronef n'a jusqu'à ce jour pas pu être mis au point de façon efficace, notamment en ce qui concerne le chauffage des pales du rotor d'un giravion ; ces pales sont donc généralement chauffées par conduction, par exemple comme décrit dans les brevets US-2005-184193 et FR-2863586.

Le chauffage par conduction (par effet Joule) d'une paroi d'aéronef en matériau composite comportant des fibres ou tissus de renfort noyés dans une résine thermoplastique ou thermodurcissable, est cependant susceptible de provoquer l'apparition, au sein de la paroi, de points ou zones « chaud(e)s », et de provoquer par conséquent une détérioration de la structure composite.

Un objectif de l'invention est de proposer un procédé et un dispositif de dégivrage d'une paroi d'aéronef, et une paroi d'aéronef intégrant un tel dispositif, qui soi(en)t améliorés(es) et/ou qui remédie(nt), en partie au moins, aux lacunes ou inconvénients des systèmes de dégivrage connus, tout en conférant un rendement optimisé.

Selon un aspect de l'invention, il est proposé un dispositif de dégivrage pour une paroi d'aéronef comportant une structure composite et une couche ou peau constituée d'un matériau électriquement conducteur, en particulier un métal ou alliage métallique à base de fer (tel que de l'acier), de nickel, ou de titane, qui comporte plusieurs éléments inducteurs minces, en particulier en forme de plaque ou de coque, qui sont prévus pour s'étendre sensiblement parallèlement à la couche ou peau de matériau conducteur, à une distance suffisamment faible de celle-ci pour provoquer, lorsque l'inducteur est alimenté par une source de courant alternatif de fréquence adaptée, un échauffement rapide et homogène de la couche ou peau, sans échauffement notable de la structure composite.

Selon un autre aspect de l'invention, il est proposé une pièce d'aéronef, et en particulier une pale de rotor de giravion, qui comporte une structure composite comportant des renforts noyés dans une résine, ainsi qu'une peau électriquement conductrice recouvrant une partie de la structure composite, et des inducteurs placés au sein de la structure composite, électriquement isolés de la peau par de la résine, et prévus pour provoquer l'échauffement de la peau par induction lorsqu'ils sont alimentés.

De préférence, les inducteurs comportent des bobines de fil conducteur qui sont plates (minces) et comportent un grand nombre de spires ou boucles. L'inducteur peut également se présenter sous la forme d'un tissu ou d'un tricot à base de fibres de verre isolant et fils de Litz conducteur qui est imprégné d'une matrice organique. Le tissu peut être poudré, et peut présenter un maillage de type sergé, taffetas ou satin.

Selon un mode préféré de réalisation, l'épaisseur d'une bobine et/ou d'un inducteur est inférieure à son diamètre - ou diamètre équivalent -, en particulier inférieure au dixième de son diamètre - ou diamètre équivalent-.

Grâce à leur minceur, les bobines et les inducteurs peuvent être conformés pour s'étendre le long d'une surface - plane ou en forme de portion de cylindre ou de coque - qu'épouse la peau à chauffer, de sorte que l'efficacité de l'induction est augmentée au travers de la répartition des lignes de champs et donc de la densité de courant plus homogène pour rendre plus efficace le chauffage de l'élément métallique, inox, titane, nickel et ses alliages - cobalt par exemple (NI-CO). Le courant induit produit chauffe alors par effet Joule l'élément métallique soumis au champ magnétique.

Selon un mode préféré de réalisation, chaque bobine d'inducteur comporte plusieurs dizaines ou centaines de spires ou boucles accolées/imbtiquées de fil conducteur, pour augmenter également l'efficacité de l'induction.

Selon d'autres caractéristiques préférentielles de l'invention :
- chaque bobine présente une forme allongée selon un axe et comporte deux nappes de fil de Litz (nappes de fils tressés ou toronnés) qui s'étendent sensiblement parallèlement à l'axe de la bobine, les deux nappes étant séparées par un espace dénué de fils d'induction;
- chaque inducteur comporte deux celles bobines juxtaposées, chaque nappe de chaque bobine comportant plusieurs dizaines ou centaines de portions (ou tronçons) de fil tressé ;
- le diamètre du fil conducteur utilisé pour former les inducteurs est inférieur ou égal à 2 mm environ, en particulier de l'ordre de 0,2 mm environ à 1 mm environ, ce qui facilite l'intégration du fil au sein des fibres ou du tissu des couches d'un matériau composite et limite les pertes dans les inducteurs ;
- un maillage de type sergé équilibré ou de type hybride (fibre de verre/carbone/fil de Litz) peut permettre d'augmenter la tenue mécanique du tissu rentrant dans la constitution de l'inducteur ainsi que la déformabilité de l'ensemble après tissage ;
- un grand nombre de fils de Litz permet d'augmenter la densité du courant, d'obtenir un recouvrement des lignes de champ et un chauffage homogène sur le bord d'attaque ;
- on peut effectuer un poudrage de ces tissus et appliquer un cycle de conformage de façon à réaliser la forme définitive de l'inducteur et/ou avoir la possibilité d'injecter en infusion une résine d'imprégnation et polymériser l'ensemble de façon à obtenir une pièce finie prête à être collée entre le bord d'attaque et la pale de giravion.

Selon un autre aspect de l'invention, il est proposé un procédé de dégivrage d'une telle paroi d'aéronef dans lequel on alimente les inducteurs avec un courant dont la fréquence est située entre 10 et 100 kHz, de préférence entre 40 et 70 kHz, en particulier voisine de 50 kHz environ.

D'autres aspects, caractéristiques, et avantages de l'invention apparaissent dans la description suivante, qui se réfère aux dessins annexés et qui illustre, sans aucun caractère limitatif, des modes préférés de réalisation de l'invention.
La figure 1 illustre schématiquement un inducteur constitué de deux bobines minces juxtaposées.
La figure 2 illustre schématiquement, en vue en perspective, un inducteur à deux bobines juxtaposées et les conducteurs pour le raccordement de l'inducteur à une source de courant.
La figure 3 illustre schématiquement, en vue en coupe dans un plan perpendiculaire à l'axe des nappes des bobines d'un inducteur, la disposition des fils conducteurs formant les nappes et noyés dans la résine et/ou intégrés à une structure composite ; la figure 3 est une vue selon III-III de la figure 2.
La figure 4 illustre schématiquement, en vue en coupe transversale (par référence à l'axe longitudinal d'une pale), l'implantation des nappes d'un inducteur à proximité d'un insert métallique intégré à la pale d'un rotor de giravion, au voisinage de son bord d'attaque.
La figure 5 illustre schématiquement, en vue en perspective, un inducteur similaire à celui des figures 2 et 3, dont la forme des bobines épouse celle d'un insert de bord d'attaque de pale de rotor d'hélicoptère, comme dans la configuration illustrée figure 4.
Les figures 6 à 8 illustrent respectivement trois configurations d'implantation d'inducteur au sein d'une pale de rotor d'hélicoptère ; la figure 6 montre sept inducteurs répartis le long du bord d'attaque, et le long de l'extrados - ou de l'intrados ; la figure 7 montre sept inducteurs tels que celui illustré figure 5, qui sont régulièrement repartis le long du bord d'attaque ; la figure 8 montre une pale équipée d'un seul inducteur s'étendant le long d'une partie substantielle de la longueur de la pale.

Conformément à un aspect de l'invention, le système de dégivrage par induction de pales d'hélicoptère comporte des inducteurs noyés dans la pale qui, une fois soumis à un courant alternatif à haute fréquence, émettent un champ magnétique du centre de la pale vers l'extérieur. Le champ magnétique crée alors des courants induits dans la coiffe métallique de protection du bord d'attaque (constituée d'un matériau électriquement conducteur).

En soumettant le matériau conducteur électrique (coiffe de bord d'attaque) à un champ magnétique variable, la variation du flux magnétique induit au sein du matériau (loi de Lentz) des forces électromotrices qui donnent naissance à des courants induits (courants de Foucault). Ces courants de Foucault échauffent alors le matériau de la coiffe par effet Joule.

A haute fréquence, un phénomène nuisible appelé effet de peau vient perturber la répartition des densités de courant au sein des inducteurs : les courants dans le matériau à chauffer ne pénètrent souvent que partiellement à l'intérieur de celui-ci ; en pénétrant dans le matériau, l'intensité du champ décroît en suivant une loi exponentielle et oblige la densité des courants induits à se concentrer dans la couche superficielle ; ce phénomène est atténué/évité en réalisant les inducteurs avec des fils de Litz (fil en brins torsadés) qui permettent d'obtenir une densité de courant uniforme au sein des nappes des bobines/inducteurs grâce à une définition et une maîtrise des formes de circuits des fils de Litz pour obtenir des lignes de champ uniformément réparties sur la coiffe métallique.

Lorsque la fréquence du courant d'induction augmente d'une valeur voisine de 10 kHz à une valeur voisine de 70 kHz et plus, les lignes de champ se concentrent autour de l'inducteur. Pour rendre homogène cette répartition, afin qu'il n'y ait pas de zone de la coiffe qui ne soit pas traversée par les lignes de champs, il est préférable d'utiliser un inducteur comportant deux bobines dont les quatre nappes forment trois conducteurs (éléments inducteurs) plats qui sont placés, pour l'un en bec de bord d'attaque, et pour les deux autres sur les ailes opposées (intrados et extrados) du bord d'attaque, chaque nappe et/ou bobine présentant une épaisseur de l'ordre de un ou plusieurs millimètre.

Dans certaines configurations, on a observé que la puissance dissipée dans la plaque ou feuille d'induit (coiffe) décroît avec le nombre de nappes de l'inducteur. En effet, lorsque l'on passe d'un système à une nappe à un système à deux nappes, l'une conduisant le courant dans un sens « positif » et l'autre dans un sens opposé (« négatif»), les nappes induisent des courants respectivement négatifs et positifs dans la plaque. Ces deux courants se rencontrent dans la plaque au dessus de l'interface entre les deux nappes et ils s'annulent dans cette zone qui présente une densité de courant nulle, ce qui réduit la puissance dissipée dans la plaque

Plus on éloigne les nappes de l'induit, plus la puissance dissipée dans celui ci est faible. Il est donc préférable de placet les nappes de l'inducteur au plus près de la coiffe.

On peut ainsi obtenir un chauffage efficace de la coiffe permettant par exemple, pour une température initiale de la coiffe de -40°C d'atteindre 10°C en surface après quelques secondes de chauffage avec une densité de courant de 4.10⁶ A/m².

L'alimentation des inducteurs par quelques brins (par exemple 3 brins) des « fils de Litz » permet de réduire l'intensité du courant d'alimentation des boucles à moins de 100 ampères, en particulier à quelques ampères, par exemple de l'ordre de 5 à 10 ampères environ, alors que l'intensité totale circulant dans chaque nappe de l'inducteur est bien supérieure, par exemple de l'ordre de 400 ampères environ.

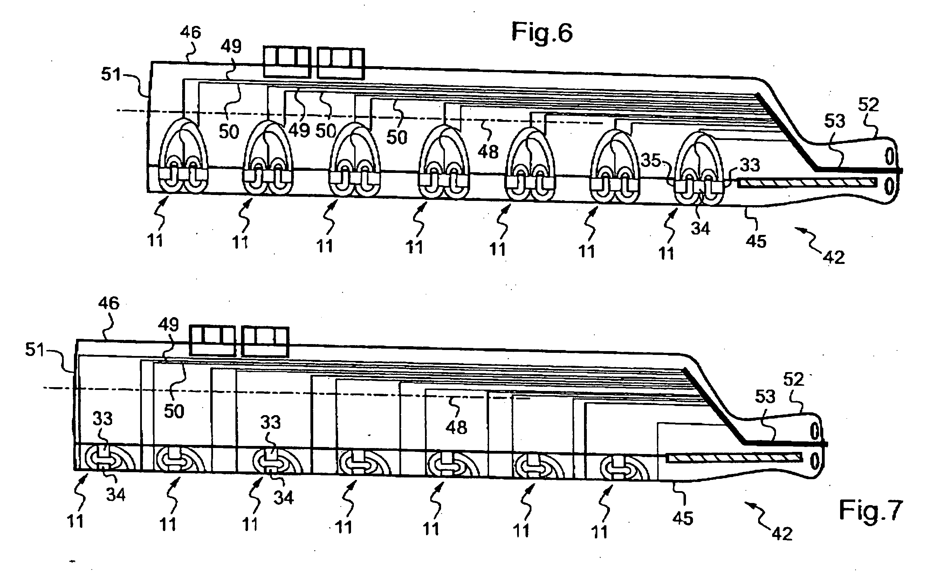

Afin de permettre un dégivrage localisé et cyclique du bord d'attaque, on peut disposer plusieurs inducteurs le long du bord d'attaque, comme illustré par exemple figure 6 ou 7.

Le système de chauffage par induction inclus dans la pale peut également servir de dispositif d'enlèvement de la coiffe de protection de bord d'attaque lorsque ce dernier présente un niveau d'érosion conséquent ou d'impact et doit être remplacé. Le bord d'attaque étant retenu par un adhésif thermofusible dont la température de ramollissement est inférieure à la température maximum que la plaque peut atteindre sous l'effet du système à induction électromagnétique, on peut échauffer le bord d'attaque jusqu'à pouvoir arracher ce dernier par pelage pour la maintenance des pales, par exemple comme décrit plus en détail dans le brevet FR-2787366 et US-6 470 544.

Le système de chauffage par induction inclus dans la pale peut également servit de chauffage pour polymériser rapidement les bords d'attaque dans le cas d'une réparation rapide, en contrôlant l'échauffement en fonction de la cinétique de polymérisation de l'adhésif.

Par ailleurs, l'activation du système d'induction à des niveaux d'intensité assez faible, le cas échéant en l'absence de givre, peut permettre de réaliser un brouillage électromagnétique afin d'éviter que le giravion ne soit détecté par un appareil adverse.

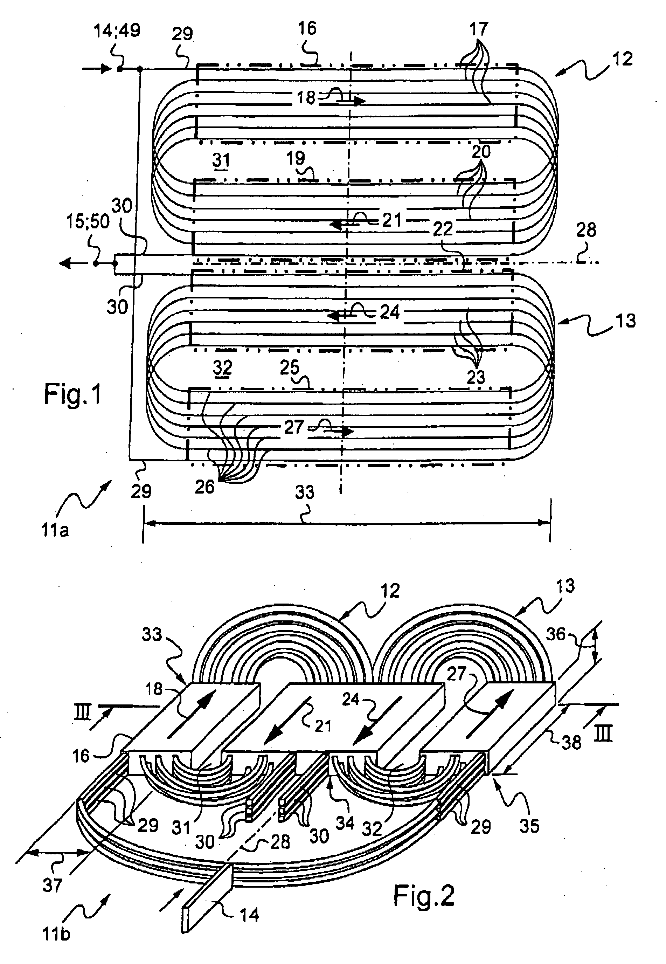

Par référence à la figure 1 notamment, l'inducteur 11a comporte deux bobines 12 et 13 qui sont électriquement raccordées en parallèle aux bornes 14 et 15 d'une source (non représentée) de courant alternatif.

La bobine 12 comporte une première nappe 16 de brins 17 électriquement conducteurs dans lesquels le courant circule dans le sens 18, et une seconde nappe 19 de brins 20 conducteurs du courant dans le sens 21 opposé au sens 18.

De la même façon, la bobine 13 comporte une première nappe 22 de brins conducteurs 23 dans lesquels le courant circule dans le sens 24, ainsi qu'une seconde nappe 25 de conducteurs 26 dans lesquels le sens du courant est repéré 27.

Les brins 17 et 20 sont reliés et forment des boucles ou spires de la bobine 12 ; les brins 23 et 26 sont également reliés et forment les boucles de la bobine 13.

Les brins 17, 20, 23, 26 et les nappes 16, 19, 22, 25 s'étendent parallèlement à l'axe 28.

En « empilant » trois inducteurs 11a minces tels que celui de la figure 1, on obtient un inducteur 11b tel qu'illustré figure 2, dans lequel chaque bobine est alimentée par trois conducteurs 29, 30.

On observe figures 1 et 2 que les deux nappes centrales 19 et 22 sont jointives, tandis que les nappes 16 et 25 sont respectivement séparées des nappes 19 et 22 par deux espaces 31 et 32.

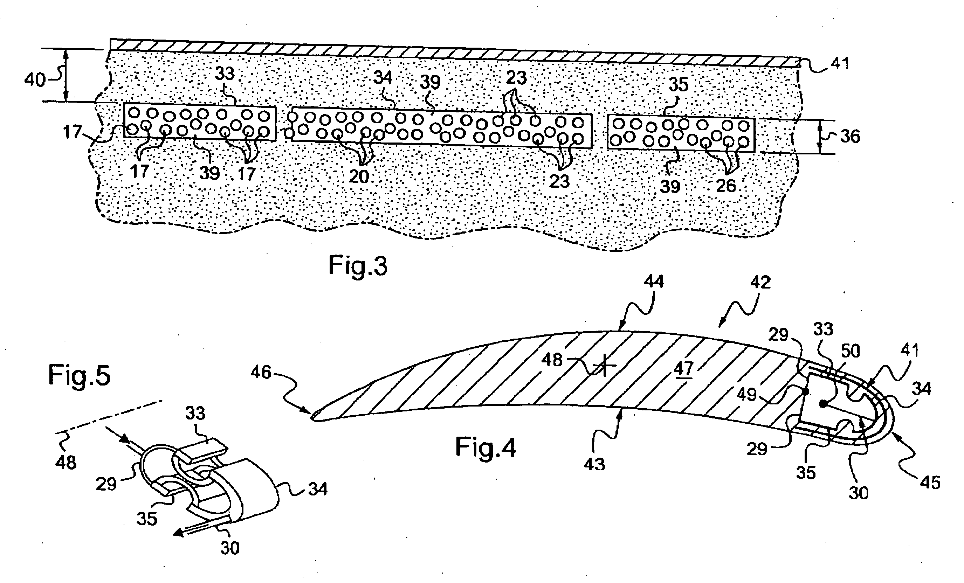

Lorsque les nappes sont enrobées de résine 39 et/ou noyées dans trois structures 33, 34, 35 en matériau (isolant) composite schématiquement représentés par des parallélépipèdes rectangle (cf. figure 3), ces trois éléments (33 à 35) d'inducteurs sont placés à faible distance 40 de la plaque/coiffe 41 ferromagnétique à chauffer par induction ; cette distance est de préférence de l'ordre de 0,1mm environ à 3 mm environ, en particulier de l'ordre de 0,1mm environ à 1mm environ.

L'épaisseur 36 de chaque bobine 12, 13 et de chaque élément 33, 34, 35 peut être de l'ordre de 1mm environ à 2 mm environ ; la largeur 37 de chaque bobine et de chaque élément 33, 34, 35 peut être de l'ordre de 10mm environ à 50mm environ ; la longueur 38 peut varier de quelques mm à plusieurs mètres selon la configuration choisie (cf. figures 6 à 8).

Par référence aux figures 4 et 6 à 8, la pale 42 présente un intrados 43, un extrados 44, un bord d'attaque 45 et un bord de fuite 46.

Par référence à la figure 4 notamment, une coiffe 41 métallique recouvre le bord d'attaque et une partie « avant » des intrados et extrados 43, 44 qu'elle protège contre les chocs.

Les éléments 33 à 35 d'un inducteur sont logés dans la structure composite 47 de la pale, et s'étendent en regard et à faible distance de la coiffe 41.

L'inducteur est relié à deux conducteurs 49, 50 d'alimentation qui s'étendent longitudinalement par référence à l'axe longitudinal 48 de la pale 42, par les conducteurs 29 et 30 respectivement.

Par référence aux figures 4 et 5 notamment, alors que les deux éléments 33, 35 d'inducteur ont une forme de plaque mince sensiblement plane ou faiblement incurvée, l'élément central 34 d'inducteur présente une forme de plaque mince cintrée ou coque qui épouse la forme de la partie avant de la coiffe 41.

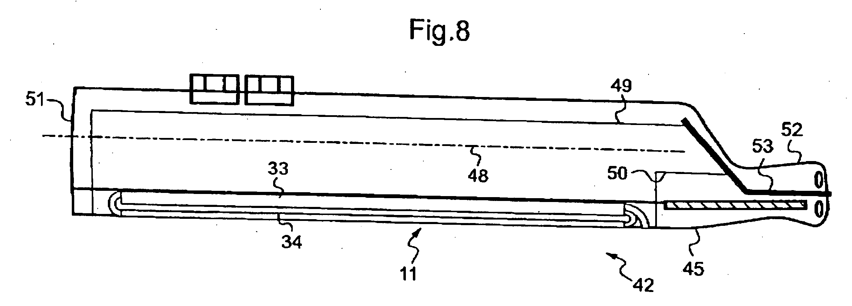

Alors que dans le mode de réalisation illustré figure 6, les nappes des inducteurs s'étendant perpendiculairement à l'axe longitudinal 48 de la pale, les nappes des inducteurs s'étendent parallèlement à cet axe dans les modes de réalisation illustrés figures 7 et 8.

Dans ces trois modes de réalisation, les inducteurs s'étendent - de façon continue figure 8 et de façon discontinue figures 6 et 7 - le long du bord d'attaque 45 et de l'axe 48, sensiblement régulièrement, sur une grande partie de la longueur de la pale, entre ses deux extrémités (pied de pale 52 et saumon 51).

Les conducteurs 49 et 50 sont rassemblés en un bus 53 qui, au travers d'un collecteur tournant non représenté, permet l'alimentation des inducteurs par une source d'énergie embarquée à bord du giravion.

## Revendications

1. Dispositif de dégivrage d'une paroi d'aéronef comportant une structure composite (47) et une couche ou peau (41) constituée d'un matériau électriquement conducteur, en particulier un métal ou alliage métallique,
**caractérisé en ce qu'**il comporte au moins trois éléments inducteurs minces (33-35) qui sont prévus pour s'étendre sensiblement parallèlement à la couche ou peau de matériau conducteur, à une distance (40) suffisamment faible de celle-ci pour provoquer, lorsque ces éléments inducteurs (33-35) sont alimentés par une source de courant alternatif de fréquence adaptée, un échauffement rapide et homogène de la couche ou peau, sans échauffement notable de la structure composite,
**en ce que** ces éléments inducteurs (33-35) sont en forme de plaque ou de coque et comportent des bobines (12, 13) de fil conducteur qui sont plates et comportent un grand nombre de spires ou boucles,
**en ce que** l'épaisseur d'une bobine et/ou d'un élément inducteur (33-35) est -de l'ordre de 1mm à 2mm environ,
et **en ce que** chaque bobine (12, 13) présente une forme allongée selon un axe (28) et comporte deux nappes (16, 19, 22, 25) de fils tressés ou toronnés qui s'étendent sensiblement parallèlement à l'axe de la bobine, les deux nappes d'une même bobine (12, 13) étant séparées par un espace (31, 32) dénué de fils d'induction, un élément inducteur central (34) comportant deux nappes (19,22) jointives et faisant chacune partie d'une bobine (12, 13) disctincte.

2. Dispositif selon la revendication 1, dans lequel chaque élément inducteur (33-35) comporte deux bobines (12, 13) juxtaposées, chaque nappe (16, 19, 22, 25) de chaque bobine comportant plusieurs dizaines ou centaines de portions de fil tressé.

3. Dispositif selon l'une des revendications 1 ou 2, dans lequel chaque bobine d'inducteur comporte plusieurs dizaines de spires ou boucles accolées et/ou imbriquées.

4. Dispositif selon l'une des revendications 1 à 3, dans lequel chaque bobine (12, 13) ou élément inducteur (33-35) comporte plusieurs centaines de spires ou boucles accolées et/ou imbriquées.

5. Dispositif selon l'une des revendications 1 à 4, dans lequel les inducteurs comportent un tissu ou tricot de fibres isolantes et de fils conducteurs.

6. Dispositif selon la revendication 5, dans lequel le maillage du tissu ou tricot est de type sergé, taffetas, satin, ou hybride.

7. Dispositif selon l'une des revendications 1 à 6, dans lequel le diamètre du fil conducteur utilisé pour former les inducteurs est de l'ordre de 0,2 mm environ à 1 mm environ.

8. Pièce (42) d'aéronef qui comporte une structure composite comportant des renforts noyés dans une résine, ainsi qu'une peau (41) électriquement conductrice recouvrant une partie de la structure composite,
**caractérisée en ce qu'**elle comporte au moins un dispositif selon l'une des revendications 1 à 7, où des éléments inducteurs (33 à 35) sont placés au sein de la structure composite, électriquement isolés de la peau par la résine, et une distance (40) entre la peau (41) et un élément inducteur (33-35) étant de l'ordre de 0,1mm à 3mm, en particulier de l'ordre de 0,1mm à 1mm.

9. Pièce selon la revendication 8, **caractérisée en ce que** les éléments induteurs (33-35) présentent une largeur (37) de l'ordre de 10mm à 50mm,et une longueur (38) entre quelques mm et plusieurs mètres.

10. Pièce selon l'une des revendications 8 ou 9, dans laquelle les éléments inducteurs (33-35) sont conformés pour s'étendre, pour partie le long d'une surface plane et pour partie le long d'une surface en forme de portion de cylindre ou de coque qu'épouse la peau (41) à chauffer.

11. Pale (42) de rotor de giravion, qui incorpore un dispositif selon l'une des revendications 1 à 7 et / ou qui présente les caractéristiques d'une pièce selon l'une des revendications 8 à 10.

12. Pale selon la revendication 11, qui comporte un seul inducteur s'étendant sur une partie substantielle de la longueur de la pale, le long du bord d'attaque (45).

13. Pale selon la revendication 11, qui comporte plusieurs inducteurs espacés s'étendant sur une partie substantielle de la longueur de la pale, le long du bord d'attaque (45).

14. Procédé de dégivrage d'une paroi d'aéronef dans lequel on utilise un dispositif selon l'une quelconque des revendications 1 à 7, et dans lequel on alimente les inducteurs avec un courant dont la fréquence est située entre 10 et 100 kHz, de préférence entre 40 et 70 kHz, en particulier voisine de 50 kHz environ.

15. Procédé selon la revendication 14 dans lequel on alimente les inducteurs avec un courant dont l'intensité est inférieure à 100 Ampères.

## Claims

1. A device for de-icing the wall of an aircraft comprising a composite structure (47) and a layer or skin (41) formed of an electrically conductive material, in particular a metal or metal alloy,
**characterised in that** it comprises at least three thin inductor elements (33-35) which are intended to extend substantially parallel to the layer or skin of conductive material, at a sufficiently short distance (40) therefrom to cause rapid, homogenous heating of the layer or skin, without notable heating of the composite structure, when these inductor elements (33-35) are supplied with a source of alternating current of appropriate frequency,
**in that** these inductor elements (33-35) are in the form of a plate or shell and comprise coils (12, 13) of conductive wire which are flat and comprise a large number of turns or loops,
**in that** the thickness of a coil and/or of an inductor element (33-35) is of the order of 1 mm to 2 mm approximately,
and **in that** each coil (12, 13) has a form elongated along an axis (28) and comprises two layers (16, 19, 22, 25) of braided or stranded wires which extend substantially parallel to the axis of the coil, the two layers of one and the same coil (12, 13) being separated by a space (31, 32) devoid of induction wires, a central inductor element (34) comprising two adjacent layers (19, 22) which each form part of a separate coil (12, 13).

2. A device according to Claim 1, in which each inductor element (33-35) comprises two juxtaposed coils (12, 13), each layer (16, 19, 22, 25) of each coil comprising several tens or hundreds of portions of braided wire.

3. A device according to one of Claims 1 or 2, in which each inductor coil comprises several tens of adjacent and/or interlaced turns or loops.

4. A device according to one of Claims 1 to 3, in which each coil (12, 13) or inductor element (33-35) comprises several hundreds of adjacent and/or interlaced turns or loops.

5. A device according to one of Claims 1 to 4, in which the inductors comprise a woven or knitted fabric of insulating fibres and conductive wires.

6. A device according to Claim 5, in which the mesh of the woven or knitted fabric is of the twill, taffeta, satin or hybrid type.

7. A device according to one of Claims 1 to 6, in which the diameter of the conductive wire used to form the inductors is of the order of approximately 0.2 mm to approximately 1 mm.

8. A part (42) of an aircraft which comprises a composite structure comprising reinforcements embedded in a resin, and also an electrically conductive skin (41) covering part of the composite structure,
**characterised in that** it comprises at least one device according to one of Claims 1 to 7, in which inductor elements (33 to 35) are placed within the composite structure, being electrically isolated from the skin by the resin, and a distance (40) between the skin (41) and an inductor element (33-35) being of the order of 0.1 mm to 3 mm, in particular of the order of 0.1 mm to 1 mm.

9. A part according to Claim 8, **characterised in that** the inductor elements (33-35) have a width (37) of the order of 10 mm to 50 mm, and a length (38) of between several millimetres and several metres.

10. A part according to one of Claims 8 or 9, in which the inductor elements (33-35) are shaped to extend in part along a planar surface and in part along a surface in the shape of a portion of a cylinder or shell to which the skin (41) to be heated fits closely.

11. A blade (42) of a rotorcraft rotor, which incorporates a device according to one of Claims 1 to 7 and/or which has the characteristics of a part according to one of Claims 8 to 10.

12. A blade according to Claim 11, which comprises a single inductor extending over a substantial part of the length of the blade, along the leading edge (45).

13. A blade according to Claim 11, which comprises a plurality of spaced-apart inductors extending over a substantial part of the length of the blade, along the leading edge (45).

14. A method for de-icing the wall of an aircraft in which a device according to any one of Claims 1 to 7 is used, and in which the inductors are supplied with a current, the frequency of which lies between 10 and 100 kHz, preferably between 40 and 70 kHz, in particular close to approximately 50 kHz.

15. A method according to Claim 14, in which the inductors are supplied with a current having an intensity of less than 100 amperes.

## Patentansprüche

1. Vorrichtung zum Enteisen einer Luftfahrzeugwand, die eine Verbundstruktur (47) und eine Schicht oder Haut (41) aufweist, die aus einem elektrisch leitenden Werkstoff besteht, insbesondere einem Metall oder einer Metalllegierung,
**dadurch gekennzeichnet, dass** sie mindestens drei dünne Induktorelemente (33-35) aufweist, die vorgesehen sind, um sich im Wesentlichen parallel zur Schicht oder Haut aus leitendem Werkstoff in einem ausreichend geringen Abstand (40) von dieser zu erstrecken, um, wenn diese Induktorelemente (33-35) von einer Wechselstromquelle mit geeigneter Frequenz gespeist werden, ein schnelles und homogenes Erwärmen der Schicht oder Haut zu bewirken, ohne bemerkenswerte Erwärmung der Verbundstruktur,
dass diese Induktorelemente (33-35) die Form einer Platte oder Schale haben und Spulen (12, 13) von Leitungsdraht aufweisen, die flach sind und eine große Anzahl von Windungen oder Schleifen aufweisen,
dass die Dicke einer Spule und/oder eines Induktorelements (33-35) in der Größenordnung von etwa 1 mm bis 2 mm liegt,
und dass jede Spule (12, 13) eine längliche Form gemäß einer Achse (28) hat und zwei Lagen (16, 19, 22, 25) von geflochtenen oder verlitzten Drähten aufweist, die sich im Wesentlichen parallel zur Achse der Spule erstrecken, wobei die zwei Lagen der gleichen Spule (12, 13) durch einen Zwischenraum (31, 32) getrennt sind, der keine Induktionsdrähte aufweist, wobei ein zentrales Induktorelement (34) zwei aneinandergrenzende Lagen (19, 22) aufweist, die je Teil einer unterschiedlichen Spule (12, 13) sind.

2. Vorrichtung nach Anspruch 1, bei der jedes Induktorelement (33-35) zwei nebeneinander angeordnete Spulen (12, 13) aufweist, wobei jede Lage (16, 19, 22, 25) jeder Spule mehrere zehn oder hundert Abschnitte von geflochtenem Draht aufweist.

3. Vorrichtung nach einem der Ansprüche 1 oder 2, bei der jede Induktorspule mehrere zehn Windungen oder Schleifen aufweist, die aneinandergefügt und/oder ineinandergefügt sind.

4. Vorrichtung nach einem der Ansprüche 1 bis 3, bei der jede Spule (12, 13) oder jedes Induktorelemente (33-35) mehrere hundert Windungen oder Schleifen aufweist, die aneinandergefügt und/oder ineinandergefügt sind.

5. Vorrichtung nach einem der Ansprüche 1 bis 4, bei der die Induktoren ein Gewebe oder ein Gewirk von Isolierfasern und von Leitungsdrähten aufweisen.

6. Vorrichtung nach Anspruch 5, bei der die Vermaschung des Gewebes oder Gewirks vom Typ Serge, Taft, Satin oder hybrid ist.

7. Vorrichtung nach einem der Ansprüche 1 bis 6, bei der der Durchmesser des Leitungsdrahts, der zur Bildung der Induktoren verwendet wird, in der Größenordnung von etwa 0,2 mm bis etwa 1 mm liegt.

8. Luftfahrzeug-Bauteil (42), das eine Verbundstruktur aufweist, die in ein Harz eingebettete Verstärkungen sowie eine elektrisch leitende Haut (41) aufweist, die einen Teil der Verbundstruktur bedeckt,
**dadurch gekennzeichnet, dass** es mindestens eine Vorrichtung nach einem der Ansprüche 1 bis 7 aufweist, wobei Induktorelemente (33 bis 35) innerhalb der Verbundstruktur angeordnet, durch das Harz elektrisch von der Haut isoliert sind, und ein Abstand (40) zwischen der Haut (41) und einem Induktorelement (33-35) in der Größenordnung von 0,1 mm bis 3 mm, insbesondere in der Größenordnung von 0,1 mm bis 1 mm liegt.

9. Bauteil nach Anspruch 8, **dadurch gekennzeichnet, dass** die Induktorelemente (33-35) eine Breite (37) in der Größenordnung von 10 mm bis 50 mm und eine Länge (38) zwischen einigen mm und mehreren Metern haben.

10. Bauteil nach einem der Ansprüche 8 oder 9, bei dem die Induktorelemente (33-35) ausgebildet sind, um sich zum Teil entlang einer ebenen Fläche und zum Teil entlang einer Fläche in Form eines Zylinders oder einer Schale zu erstrecken, an die sich die zu erwärmende Haut (41) anpasst.

11. Rotorblatt (42) eines Drehflüglers, in das eine Vorrichtung nach einem der Ansprüche 1 bis 7 eingebaut ist und/oder das die Merkmale eines Bauteils nach einem der Ansprüche 8 bis 10 aufweist.

12. Blatt nach Anspruch 11, das einen einzigen Induktor aufweist, der sich über einen wesentlichen Teil der Länge des Blatts entlang der Vorderkante (45) erstreckt.

13. Blatt nach Anspruch 11, das mehrere in Abstand angeordnete Induktoren aufweist, die sich über einen wesentlichen Teil der Länge des Blatts entlang der Vorderkante (45) erstrecken.

14. Verfahren zum Enteisen einer Luftfahrzeugwand, bei dem eine Vorrichtung nach einem der Ansprüche 1 bis 7 verwendet wird und bei dem die Induktoren mit einem Strom gespeist werden, dessen Frequenz zwischen 10 und 100 kHz, vorzugsweise zwischen 40 und 70 kHz, insbesondere nahe etwa 50 kHz liegt.

15. Verfahren nach Anspruch 14, bei dem die Induktoren mit einem Strom gespeist werden, dessen Stärke unter 100 Ampere liegt.
